(19) Europäisches Patentamt / European Patent Office / Office européen des brevets

(11) **EP 3 845 295 A1**

(12) **EUROPEAN PATENT APPLICATION**
published in accordance with Art. 153(4) EPC

(43) Date of publication:
**07.07.2021 Bulletin 2021/27**

(21) Application number: **19855010.5**

(22) Date of filing: **05.08.2019**

(51) Int Cl.:
**B01D 61/00** (2006.01)     **C02F 1/44** (2006.01)
**C09K 3/00** (2006.01)

(86) International application number:
**PCT/JP2019/030659**

(87) International publication number:
**WO 2020/044965 (05.03.2020 Gazette 2020/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **29.08.2018   JP 2018159985**

(71) Applicant: **JFE Engineering Corporation**
**Tokyo 100-0005 (JP)**

(72) Inventors:
• **OSATO, Aya**
  **Tokyo 100-0005 (JP)**
• **TSUJI, Takeshi**
  **Tokyo 100-0005 (JP)**
• **FUCHIGAMI, Koji**
  **Tokyo 100-0005 (JP)**
• **TOMURA, Keiji**
  **Tokyo 100-0005 (JP)**
• **FUJIWARA, Shigeki**
  **Tokyo 100-0005 (JP)**
• **KUNUGI, Makoto**
  **Tokyo 100-0005 (JP)**
• **SATO, Yuya**
  **Tokyo 100-0005 (JP)**
• **WATANABE, Eri**
  **Tokyo 100-0005 (JP)**
• **NAKAGAWA, Masami**
  **Osaka-shi, Osaka 532-0011 (JP)**
• **HAMAGUCHI, Sohei**
  **Osaka-shi, Osaka 532-0011 (JP)**
• **KUBO, Koji**
  **Osaka-shi, Osaka 532-0011 (JP)**

(74) Representative: **Hoffmann Eitle**
**Patent- und Rechtsanwälte PartmbB**
**Arabellastraße 30**
**81925 München (DE)**

(54) **TEMPERATURE-SENSITIVE WATER ABSORBENT, WATER TREATMENT METHOD, AND WATER TREATMENT DEVICE**

(57)     In order to obtain not only a high osmotic pressure but also lower a cloud point, a thermo-sensitive draw solute includes a polyoxyalkylene adduct represented by a general formula: $R^1O(AO)_nR^2$ (1), where $R^1$ denotes a residue after withdrawal of a hydroxy group from a monovalent alcohol having a carbon number ranging from 6 to 13, $R^2$ denotes a hydrogen atom or denotes an alkyl group or an alkenyl group having a carbon number ranging from 1 to 13, AO denotes an oxyalkylene group having a carbon number ranging from 2 to 4, n denotes an average added mole number of an alkylene oxide ranging from 1 to 235, and where n is two or more, the two or more AOs may be the same or different from each other. $R^1$ is a residue of an aliphatic monovalent alcohol having a carbon number ranging from 6 to 13, a residue of an aliphatic linear monovalent alcohol having a carbon number ranging from 6 to 13, or a residue of an aliphatic branched monovalent alcohol having a carbon number ranging from 6 to 13.

EP 3 845 295 A1

# FIG.8

DISCHARGE

CONCENTRATED WATER-CONTAIN- 11a
ING SOLUTION

11

WATER-CONTAIN-
ING SOLUTION

REGENERATED
DRAW

DILUTED
DRAW

REGENERATED
DRAW

12

13

SEPARATION
VESSEL

WATER-RICH

22

14

FINAL
TREATMENT
UNIT

PRODUCED
WATER
(FRESH
WATER)

DILUTED
DRAW

**Description**

Field

The present invention relates to a thermo-sensitive draw solute to extract water from a water-containing solution including water as a solvent, and to a water treatment method and a water treatment apparatus using the thermo-sensitive draw solute.

Background

In the past, various methods have been known to extract fresh water from sea water by using a semipermeable membrane. Specifically, a reverse osmosis method has been mainly developed in which water is forcibly permeated through a reverse osmosis membrane by applying to sea water a pressure higher than an osmotic pressure. However, in the reverse osmosis method, because it is necessary to apply a high pressure to sea water, there has been a problem of an increase in the costs of equipment and operation. Therefore, in recent years, a method to produce fresh water is being developed in which sea water is contacted, via a semipermeable membrane, with a salt solution having a higher salt concentration than sea water thereby migrating water in the sea water to the salt solution by means of the osmotic pressure without applying a high pressure so as to separate and recover the fresh water.

For example, in patent literature 1, a technology to produce a cooling single phase water-rich flow is disclosed in which a pollutant-feeding solution flow including water and having a first osmotic pressure is permeated through a semipermeable membrane to a drawing side that feeds a draw solution flow including a draw solute and having a second osmotic pressure followed by heating, agglomeration, and cooling. In patent literature 1, a random copolymer or a sequential copolymer of a low molecular weight diol is mentioned as the draw solute.

In patent literature 2, a technology is described in which a thermal phase separating substance flow including a thermal phase separating substance and a feeding flow including a solvent are made to flow countercurrently or in parallel via a semipermeable membrane so as to permeate the solvent to the thermal phase separating substance flow. In patent literature 2, an alkylene oxide polymer modified with a specific hydrophobic group having a carbon number of 1 to 3 is mentioned as the thermal phase separating substance.

Citation List

Patent Literature

[Patent Literature 1] Japanese Laid-open Patent Publication (Translation of PCT Application) No. 2014-512951
[Patent Literature 2] Japanese Laid-open Patent Publication No. 2017-148734

Summary

Technical Problem

However, in what is called a thermo-sensitive draw solute such as the thermal phase separating substance used in the conventional technologies described above, there have been problems that the water drawing property as the draw solute was insufficient because of a low osmotic pressure, and that the energy cost was high because of a high phase separation temperature. Namely, in the diol polymer described in Japanese Laid-open Patent Publication (Translation of PCT Application) No. 2014-512951 as the thermo-sensitive draw solute, there is a problem of an insufficient water drawing property due to a low osmotic pressure. In the alkylene oxide polymer terminated with an alkyl group having a carbon number of 1 to 3 described in Japanese Laid-open Patent Publication No. 2017-148734, the cloud point, i.e., the separating temperature, is as high as 150°C. Accordingly, in the thermo-sensitive draw solute described in Japanese Laid-open Patent Publication No. 2017-148734, it is very difficult to reach the cloud point by utilizing a waste heat in the water treatment apparatus using a forward osmosis, so that there is a problem in that an energy cost required for the water treatment apparatus increases.

The present invention was made in view of the above circumstances, so that an object of the present invention is to provide a thermo-sensitive draw solute enabling to obtain a high osmotic pressure and to lower the cloud point. Another object thereof is to provide a water treatment method and a water treatment apparatus with which an energy cost can be lowered.

Solution to Problems

To solve the problem and achieve the object, a thermo-sensitive draw solute according to the present invention includes: a polyoxyalkylene adduct represented by a general formula (1):

$$R^1O(AO)_nR^2 \qquad (1)$$

where $R^1$ denotes a residue after withdrawal of a hydroxy group from a monovalent alcohol having a carbon number ranging from 6 to 13, $R^2$ denotes a hydrogen atom or denotes an alkyl group or an alkenyl group having a carbon number ranging from 1 to 13, AO denotes an oxyalkylene group having a carbon number ranging from 2 to 4, n denotes an average added mole number of an alkylene oxide ranging from 1 to 235, and where n is two or more, the two or more AOs may be the same or different from each other.

Moreover, in the thermo-sensitive draw solute according to the present invention, $R^1$ in the polyoxyalkylene adduct represented by the general formula (1) is a residue of an aliphatic monovalent alcohol having a carbon number ranging from 6 to 13.

Moreover, in the thermo-sensitive draw solute according to the present invention, $R^1$ in the polyoxyalkylene adduct represented by the general formula (1) is a residue of an aliphatic linear monovalent alcohol having a carbon number ranging from 6 to 13.

Moreover, in the thermo-sensitive draw solute according to the present invention, $R^1$ in the polyoxyalkylene adduct represented by the general formula (1) is a residue of an aliphatic branched monovalent alcohol having a carbon number ranging from 6 to 13.

Moreover, in the thermo-sensitive draw solute according to the present invention, the AO in the polyoxyalkylene adduct represented by the general formula (1) is represented by a general formula (2):

$$- (A^1O)_x/(A^2O)_y/(A^3O)_z- \qquad (2)$$

where $A^1O$ denotes an oxyethylene group, $A^2O$ denotes an oxypropylene group, $A^3O$ denotes an oxybutylene group, x denotes an average added mole number of an ethylene oxide ranging from 1 to 100, y denotes an average added mole number of a propylene oxide ranging from 0 to 80, z denotes an average added mole number of a butylene oxide ranging from 0 to 55, y is equal to 2z, y and z are not zero at the same time, and the adduct forms of $A^1O$, $A^2O$, and $A^3O$ may be a random form, a block form, or a form including both the random form and the block form.

Moreover, in the thermo-sensitive draw solute according to the present invention, in the polyoxyalkylene adduct represented by the general formula (1), when AOs are the oxyethylene group and the oxypropylene group, x/y ranges from 0.3 to 3.3, when AOs are the oxyethylene group and the oxybutylene group, x/2z ranges from 0.3 to 3.3, and when AOs are the oxyethylene group, the oxypropylene group, and the oxybutylene group, x/(y+2z) ranges from 0.3 to 3.3.

Moreover, in the thermo-sensitive draw solute according to the present invention, in the polyoxyalkylene adduct represented by the general formula (1), when AOs are the oxyethylene group and the oxypropylene group, x/y ranges from 0.5 to 2.9, when AOs are the oxyethylene group and the oxybutylene group, x/2z ranges from 0.5 to 2.9, and when AOs are the oxyethylene group, the oxypropylene group, and the oxybutylene group, x/(y+2z) ranges from 0.5 to 2.9.

Moreover, in the thermo-sensitive draw solute according to the present invention, in the polyoxyalkylene adduct represented by the general formula (1), when AOs are the oxyethylene group and the oxypropylene group, x/y ranges from 1.5 to 2.7, when AOs are the oxyethylene group and the oxybutylene group, x/2z ranges from 1.5 to 2.7, and when AOs are the oxyethylene group, the oxypropylene group, and the oxybutylene group, x/(y+2z) ranges from 1.5 to 2.7.

Moreover, in the thermo-sensitive draw solute according to the present invention, a molecular weight of the polyoxyalkylene adduct ranges from 500 to 6000.

Moreover, in the thermo-sensitive draw solute according to the present invention, a molecular weight of the polyoxyalkylene adduct ranges from 1000 to 4000.

Moreover, in the thermo-sensitive draw solute according to the present invention, a cloud point of the polyoxyalkylene adduct ranges from 30°C to 80°C.

Moreover, in the thermo-sensitive draw solute according to the present invention, a cloud point of the polyoxyalkylene adduct ranges from 40°C to 75°C.

Moreover, in the thermo-sensitive draw solute according to the present invention, the thermo-sensitive draw solute is used as a drawing substance in production of fresh water by a forward osmosis method.

Moreover, a water treatment method according to the present invention is a method to separate water from a water-containing solution including water as a solvent by using the thermo-sensitive draw solute according to the present invention, the method including: a forward osmosis process that permeates water from the water-containing solution to a draw solution including the thermo-sensitive draw solute through a semipermeable membrane to form a diluted draw solution; a heating process that heats the diluted draw solution to a temperature equal to or higher than a cloud point of the thermo-sensitive draw solute; and a water separation process that separates a separated water from the diluted draw solution that is heated at the heating process.

Moreover, a water treatment apparatus according to the present invention is an apparatus to separate water from a water-containing solution including water as a solvent by using the thermo-sensitive draw solute according to the present invention, the water treatment apparatus including: a forward osmosis unit configured to permeate water from the water-containing solution to a draw solution including the thermo-sensitive draw solute through a semipermeable membrane to form a diluted draw solution; a heating unit configured to heat the diluted draw solution to a temperature equal to or higher than a cloud point of the thermo-sensitive draw solute; and a water separation unit configured to separate a separated water from the diluted draw solution that is heated by the heating unit.

Advantageous Effects of Invention

With the thermo-sensitive draw solute of the present invention, not only a high osmotic pressure can be obtained, but also a cloud point can be lowered. With the water treatment method and the water treatment apparatus of the present invention, an energy cost can be lowered. Brief Description of Drawings

[FIG. 1]

FIG. 1 is the graph illustrating the dependence of the osmotic pressure difference on the EO number at each carbon number of the alkyl group at one terminal in the thermo-sensitive draw solute according to embodiments.

[FIG. 2] FIG. 2 is the graph illustrating the membrane permeation rates of the chemicals when the membrane permeation rate of Comparative Example 1 is taken as 1.

[FIG. 3] FIG. 3 is the graph illustrating the relative values of the amounts of back-diffusion at each carbon number of the terminal alkyl group when the amount of back-diffusion in Comparative Example 1 is taken as 1.

[FIG. 4] FIG. 4 is the graph illustrating the relative values of the separation times at each carbon number of the terminal alkyl group when the separation time in Comparative Example 1 is taken as 1.

[FIG. 5] FIG. 5 is the graph illustrating the relation of the osmotic pressure with the EO number/PO number ratio of the thermo-sensitive draw solute having an alkyl group at one terminal.

[FIG. 6] FIG. 6 is the graph illustrating the relation of the cloud point with the EO number/PO number ratio of the thermo-sensitive draw solute having an alkyl group at one terminal.

[FIG. 7] FIG. 7 is the graph illustrating the dependence of the viscosity in the aqueous solution of the thermo-sensitive draw solute on the molecular weight.

[FIG. 8] FIG. 8 is the block diagram schematically illustrating a water treatment apparatus according to a first embodiment of the present invention.

[FIG. 9] FIG. 9 is the block diagram schematically illustrating a water treatment apparatus according to a second embodiment of the present invention.

[FIG. 10] FIG. 10 is the block diagram schematically illustrating a water treatment apparatus according to a third embodiment of the present invention.

Description of Embodiments

Hereinafter, embodiments of the present invention will be explained with referring to the drawings. Here, in all the drawings of the following embodiments, the same or corresponding portions are tagged with the same symbol. Further, the present invention is not restricted by the embodiments explained hereinafter.

(Thermo-sensitive draw solute)

First, the thermo-sensitive draw solute according to an embodiment of the present invention will be explained. The thermo-sensitive draw solute is a substance that is hydrophilic at a low temperature so that the solubility thereof into water increases to cause an increase in a water absorption amount; on the other hand, the water absorption amount decreases with an increase in temperature thereby becoming hydrophobic at a temperature equal to or higher than a prescribed temperature to cause a decrease in the solubility thereof. In the thermo-sensitive draw solute, a temperature at which the property changes from water soluble to water insoluble is called a cloud point. In other words, the thermo-sensitive draw solute is a draw solute having a cloud point thereby having a property of being agglomerated when it is heated. Accordingly, the thermo-sensitive draw solute is often used as a drawing substance in a forward osmosis method. Here, as for the thermo-sensitive draw solute used in the present embodiment, a chemical having a polymer of ethylene oxide (EO) with at least any one kind selected from propylene oxide (PO) and butylene oxide (BO) is used.

In the present embodiment, the thermo-sensitive draw solute is a substance that is separated when it is heated to a temperature equal to or higher than the cloud point and includes at least a hydrophobic portion and a hydrophilic portion. Illustrative examples of the thermo-sensitive draw solute include a polymer (a block copolymer, a random copolymer, or a polymer including both the block copolymer and the random copolymer) formed of a linear ethylene oxide (EO) with at least any one kind selected from propylene oxide (PO) and butylene oxide (BO).

Specifically, the thermo-sensitive draw solute is formed of a polyoxyalkylene adduct represented by a general formula (1).

$$R^1O(AO)_nR^2 \qquad (1)$$

In the general formula (1), $R^1$ represents a residue after withdrawal of a hydroxy group from a linear or a branched monovalent alcohol having a carbon number of 6 to 13, namely, a residue of an aliphatic monovalent alcohol having a carbon number of 6 to 13, a residue of an aliphatic linear monovalent alcohol having a carbon number of 6 to 13, and a residue of an aliphatic branched monovalent alcohol having a carbon number of 6 to 13. Specifically, $R^1$ may be exemplified by admixture of at least two kinds selected from the group consisting of a hexyl group, an isohexyl group, a heptyl group, an isoheptyl group, an octyl group, an isooctyl group, a 2-ethylhexyl group, a nonyl group, an isononyl group, a 3,5,5-trimethylhexyl group, a decyl group, an isodecyl group, a undecyl group, an isoundecyl group, a dodecyl group, an isododecyl group, a tridecyl group, an isotridecyl group, a hexenyl group, an isohexenyl group, a heptenyl group, an isoheptenyl group, an octenyl group, an isooctenyl group, a nonenyl group, an isononenyl group, a decenyl group, an isodecenyl group, a undecenyl group, an isoundecenyl group, a dodecenyl group, an isododecenyl group, a tridecenyl group, and an isotridecenyl group.

In the general formula (1), $R^2$ represents a hydrogen atom, or an alkyl group or an alkenyl group having a carbon number of 1 to 13. Specifically, $R^2$ may be exemplified by admixture of at least two kinds selected from the group consisting of a hydrogen atom, a methyl group, an ethyl group, a propyl group, an isopropyl group, a butyl group, an isobutyl group, a pentyl group, an isopentyl group, a hexyl group, an isohexyl group, a heptyl group, an isoheptyl group, an octyl group, an isooctyl group, a 2-ethylhexyl group, a nonyl group, an isononyl group, a 3,5,5-trimethylhexyl group, a decyl group, an isodecyl group, a undecyl group, an isoundecyl group, a dodecyl group, an isododecyl group, a tridecyl group, an isotridecyl group, a propenyl group, a butenyl group, a pentenyl group, an isopentenyl group, a hexenyl group, an isohexenyl group, a heptenyl group, an isoheptenyl group, an octenyl group, an isooctenyl group, a nonenyl group, an isononenyl group, a decenyl group, an isodecenyl group, a undecenyl group, an isoundecenyl group, a dodecenyl group, an isododecenyl group, a tridecenyl group, and an isotridecenyl group.

In the general formula (1), AO represents an oxyalkylene group having a carbon number of 2 to 4. Specifically, AO is exemplified by an oxyethylene group, an oxypropylene group, and an oxybutylene group. In the general formula (1), n represents an average added mole number of the alkylene oxide in the range of 1 to 235; when n is two or more, the two or more AOs may be the same or different from each other.

In other words, the thermo-sensitive draw solute is formed of a polymer including an ethylene oxide (EO) group as a hydrophilic portion and at least any one kind selected from a propylene oxide (PO) group and a butylene oxide (BO) group as a hydrophobic portion, and the thermo-sensitive draw solute has a cloud point thereby undergoing agglomeration when it is heated. The thermo-sensitive draw solute has an alkyl group at least at one terminal of the polymer, preferably only at one terminal thereof, in which the carbon number of the alkyl group is at least 6 and up to 13.

The AO in the polyoxyalkylene adduct represented by the general formula (1) may have a composition represented by a general formula (2).

$$-(A^1O)_x/(A^2O)_y/(A^3O)_z- \qquad (2)$$

(In the general formula (2), $A^1O$ represents an oxyethylene group, $A^2O$ represents an oxypropylene group, and $A^3O$ represents an oxybutylene group, in which x represents an average added mole number of the ethylene oxide in the range of 1 to 100, y represents an average added mole number of the propylene oxide in the range of 0 to 80, and z represents an average added mole number of the butylene oxide in the range of 0 to 55. In the general formula (2), y is equal to 2z, and y and z are not zero at the same time. The adduct forms of $A^1O$, $A^2O$, and $A^3O$ may be any of a random form, a block form, and a form including both the random form and the block form.)

In the polyoxyalkylene adduct represented by the general formula (1), when AOs are the oxyethylene group and the oxypropylene group, z in the general formula (2) is zero, and x/y is typically at least 0.3 and up to 3.3. When AOs are the oxyethylene group and the oxybutylene group, y in the general formula (2) is zero, and x/2z is typically at least 0.3 and up to 3.3. When AOs are the oxyethylene group, the oxypropylene group, and the oxybutylene group, x/(y+2z) is typically at least 0.3 and up to 3.3.

In addition, in the polyoxyalkylene adduct represented by the general formula (1), when AOs are the oxyethylene group and the oxypropylene group, z in the general formula (2) is zero, and x/y is preferably at least 0.5 and up to 2.9, while more preferably at least 1.5 and up to 2.7. When AOs are the oxyethylene group and the oxybutylene group, y in the general formula (2) is zero, and x/2z is preferably at least 0.5 and up to 2.9, while more preferably at least 1.5 and up to 2.7. When AOs are the oxyethylene group, the oxypropylene group, and the oxybutylene group, $x/(y+2z)$ is preferably at least 0.5 and up to 2.9, while more preferably at least 1.5 and up to 2.7.

After these substances are clouded upon heating, when they are allowed to leave in the state of being kept at this temperature for several minutes, the clouded microparticles agglomerate among themselves thereby leading to separation into a water layer and a polymer layer. The optimum requirements of the thermo-sensitive draw solute are mainly a high osmotic pressure, a low cloud temperature, a low viscosity, and a high molecular weight.

(High osmotic pressure)

When fresh water is produced by a forward osmosis method, a semipermeable membrane used in a membrane module is mainly a forward osmosis (FO) membrane. The details of this will be explained later: in short, in order to obtain the produced water (fresh water) by desalting a water-containing solution such as sea water by means of a membrane module equipped with a forward osmosis membrane, an osmotic pressure of a draw solution including the thermo-sensitive draw solute and being flowed into the membrane module needs to be made higher than an osmotic pressure of a water-containing solution. This is because if the osmotic pressure of the draw solution is lower than the osmotic pressure of the water-containing solution, water does not permeate from the water-containing solution to the draw solution. In addition, a low recovery yield of fresh water from the water-containing solution increases the cost of an intake power, as well as the cost necessary for a solid-liquid separation pretreatment process of the water-containing solution by filtration using sand, a microfiltration membrane (MF membrane), an ultrafiltration membrane (UF membrane), or the like. Therefore, it is preferable that the recovery yield of fresh water from the water-containing solution be higher. Here, when fresh water is produced by using a reverse osmosis (RO) membrane as the semipermeable membrane of the membrane module, the recovery yield is in the range of about 30 to about 50%.

Table 1 illustrates the relation between the salt concentration of sea water, i.e., the water-containing solution, and the osmotic pressure of the concentrated water, i.e., the concentrated water-containing solution at each recovery yield. As can be seen in Table 1, as the water-containing solution to be used for production of fresh water, when the sea water whose salt concentration is in the range of 3 to 4%, which is a concentration assumed in a warm region, is used, the osmotic pressure of the concentrated water is in the range of about 30 to about 60 atm; and when the sea water whose salt concentration is in the range of 4 to 5%, which is a concentration assumed in a tropical region, is used, the osmotic pressure of the concentrated water is in the range of about 40 to about 70 atm. Here, when the difference between the osmotic pressure of the concentrated water and the osmotic pressure of the thermo-sensitive draw solute increases, the permeation rate of the forward osmosis membrane becomes faster; and thus, the membrane area necessary to obtain fresh water can be made smaller so that the equipment cost of the forward osmosis membrane can be suppressed. The difference in the osmotic pressure between the concentrated water and the thermo-sensitive draw solute is preferably about 40 atm. This is because when the difference in the osmotic pressure is too small, migration of water through the forward osmosis membrane becomes sluggish; on the other hand, when the difference in the osmotic pressure is 40 atm or more, water can permeate sufficiently well. Accordingly, for production of fresh water from sea water (hereinafter, sea water desalination) in a warm region, the osmotic pressure of the thermo-sensitive draw solute is typically 30 atm or more, while preferably 70 atm or more. In the sea water desalination in a tropical region, the osmotic pressure thereof is typically 40 atm or more, while preferably 80 atm or more. As described above, to obtain fresh water, the osmotic pressure of the thermo-sensitive draw solute is preferably as high as possible.

[Table 1]

| Salt concentration [%] | | 3 | 4 | 5 |
|---|---|---|---|---|
| Osmotic pressure of concentrated water [atm] | Recovery yield 30% | 31 | 41 | 51 |
| | Recovery yield 40% | 36 | 48 | 60 |
| | Recovery yield 50% | 43 | 57 | 71 |

(Low cloud point)

When fresh water is produced by using the forward osmosis membrane, a draw solution that contains the thermo-sensitive draw solute is heated to a temperature higher than the cloud point thereof so as to cause agglomeration of the thermo-sensitive draw solute and thereby separating it from the draw solution. Accordingly, when the cloud point of the thermo-sensitive draw solute is lower, the equipment cost of a heater and a heat-exchanger can be reduced, and in addition, a low-temperature exhaust heat can be utilized; and thus, it is preferable that the cloud point of the thermo-sensitive draw solute be lower. Therefore, specifically the cloud point of the thermo-sensitive draw solute is, for example, 80°C or lower, preferably 75°C or lower, while more preferably 70°C or lower in order to utilize an exhaust heat having a further lower temperature. In addition, with regard to the cloud point of the thermo-sensitive draw solute, the thermo-sensitive draw solute is required not to agglomerate upon absorbing water in the membrane module, and in the case when the water-containing solution is not cooled, the cloud point thereof needs to be equal to or higher than a maximum temperature assumed in the water-containing solution. Therefore, the cloud point of the thermo-sensitive draw solute is preferably 30°C or higher for the sea water desalination in a warm region, and 40°C or higher for the sea water desalination in a tropical region, while more preferably 50°C or higher in a tropical region because surface sea water is used there. Accordingly, the cloud point of the thermo-sensitive draw solute is typically at least 30°C and up to 80°C, preferably at least 40°C and up to 75°C, while more preferably at least 50°C and up to 70°C.

(High molecular weight)

When a molecular weight of the thermo-sensitive draw solute is too low, the molecular weight is lower than the cut-off molecular weight of the semipermeable membrane in the membrane module so that the draw solution may possibly leak into the water-containing solution side through the semipermeable membrane. Therefore, the molecular weight of the thermo-sensitive draw solute is preferably higher than the cut-off molecular weight of the semipermeable membrane. Specifically, for example, the cut-off molecular weight of NFW, the Synder's NF membrane, is in the range of 300 to 500 Da. Therefore, the molecular weight of the thermo-sensitive draw solute is preferably 500 or more. In addition, in order to further lower the operational pressure, use of a UF membrane is preferable. Specifically, for example, the cut-off molecular weight of the SUEZ's GE series of the UF membrane is about 1000 Da. Therefore, the molecular weight of the thermo-sensitive draw solute is more preferably 1000 or higher.

(Low viscosity)

On the other hand, when the viscosity of the draw solution becomes, for example, more than 350 cP, a significant increase in the separation time is resulted due to increase in the viscosity. Therefore, the molecular weight of the thermo-sensitive draw solute is preferably 6000 or less. In addition, the higher the molecular weight of the thermo-sensitive draw solute is, the higher the viscosity of the draw solution including the thermo-sensitive draw solute is resulted. Therefore, depending on the viscosity, the pump to be selected needs to be changed. When the viscosity of the draw solution including the thermo-sensitive draw solute is, for example, more than 230 cP, a general volute pump is difficult to be used, so that a pump for high viscosity such as a slurry pump is needed. In this case, there is a problem of an increase in the equipment cost of the pump as compared with the general volute pump. Therefore, the viscosity of the thermo-sensitive draw solute is preferably 230 cP or less. Here, the molecular weight of the thermo-sensitive draw solute corresponding to this viscosity range is 4000 or less. From the above discussion, the molecular weight of the thermo-sensitive draw solute is preferably at least 500 and up to 6000, while more preferably at least 1000 and up to 4000.

(EO number/PO number ratio)

In the structure of the thermo-sensitive draw solute, the EO group exhibits hydrophilicity and the PO group exhibits hydrophobicity. Therefore, the ratio of the average addition number of the ethylene oxide (hereinafter EO number) to the average addition number of the propylene oxide (hereinafter PO number) (EO number/PO number ratio) is a factor to determine the osmotic pressure and the cloud point of the thermo-sensitive draw solute. When the EO number/PO number ratio is too low, the hydrophobicity increases to lower the osmotic pressure; on the other hand, when the EO number/PO number ratio is too high, the hydrophilicity increases to raise the cloud point. Therefore, the EO number/PO number ratio satisfying the above-mentioned requirements of the osmotic pressure and the cloud point is typically at least 0.3 and up to 3.3, preferably at least 0.5 and up to 2.9, while more preferably at least 1.5 and up to 2.7.

(EO number/BO number ratio)

In the structure of the thermo-sensitive draw solute, the EO group exhibits hydrophilicity and the BO group exhibits hydrophobicity. Therefore, the ratio of the EO number to the average addition number of the butylene oxide (hereinafter BO number) (EO number/BO number ratio) is a factor to determine the osmotic pressure and the cloud point of the thermo-sensitive draw solute. Because in the thermo-sensitive draw solute the hydrophobicity of the BO group is about twice as strong as the hydrophobicity of the PO group, the hydrophobicity of about two PO groups is equal to the hydrophobicity of one BO group. Therefore, the EO number/2 BO number ratio satisfying the above-mentioned requirements of the osmotic pressure and the cloud point is typically at least 0.3 and up to 3.3, preferably at least 0.5 and up to 2.9, while more preferably at least 1.5 and up to 2.7.

(EO number/(PO number + 2 BO number) ratio)

In the structure of the thermo-sensitive draw solute, the EO group exhibits hydrophilicity, and the PO group and the BO group exhibit hydrophobicity. Therefore, the ratio of the EO number to the PO number and the BO number (EO number/(PO number + 2 BO number) ratio) is a factor to determine the osmotic pressure and the cloud point of the thermo-sensitive draw solute. Therefore, the EO number/(PO number + 2 BO number) ratio satisfying the above-mentioned requirements of the osmotic pressure and the cloud point is typically at least 0.3 and up to 3.3, preferably at least 0.5 and up to 2.9, while more preferably at least 1.5 and up to 2.7.

The inventor of the present invention carried out an extensive investigation to realize the thermo-sensitive draw solute as mentioned above; and as a result, it was found that the thermo-sensitive draw solute formed of a polymer including the hydrophilic EO group and the hydrophobic PO group and having an alkyl group only at one terminal of the polymer (hereinafter one terminal) was desirable. In addition, it was also found that the carbon number of the alkyl group was preferably at least 6 and up to 13.

(Method for producing the thermo-sensitive draw solute)

The above-mentioned EO/PO/BO polymer having an alkyl group at one terminal (polyoxyethylene polyoxypropylene polyoxybutylene alkyl ether) can be produced as follows. First, an alcohol such as, for example, hexanol, 2-ethylhexanol, 3,5,5-trimethylhexanol, decanol, isodecanol, or isotridecanol is caused to react with ethylene oxide and at least one oxide selected from propylene oxide and butylene oxide in the presence of a metal catalyst such as, for example, potassium oxide (KOH), in the temperature range of 150 to 200°C. After polymerization, the reaction mixture is neutralized by adding an equimolar quantity of an acid such as, for example, acetic acid or hydrochloric acid. In this way, the thermo-sensitive draw solute can be produced.

(Examples)

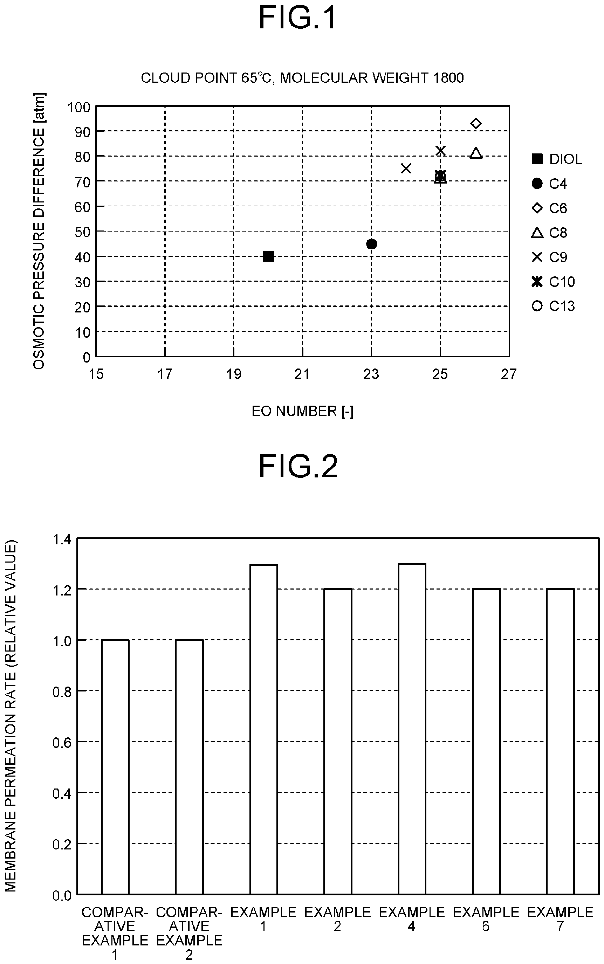

Next, Examples of the above-mentioned thermo-sensitive draw solute will be explained. In Table 2 and Table 3, properties of the thermo-sensitive draw solutes of Examples based on the present invention, and properties of the thermo-sensitive draw solutes of Comparative Examples for comparison with Examples are summarized. Table 2 and Table 3 summarize the cloud point, the osmotic pressure, and the viscosity of the thermo-sensitive draw solute when produced by variously changing the carbon number of the alkyl group at one terminal, the kind of the alkyl group, the EO number, the PO number, the EO number/PO number ratio, and the molecular weight in the case where $R^1$ is an alkyl group and $R^2$ is a hydrogen atom (H) in the general formula (1). Here, the molecular weight thereof can be measured with a gel permeation chromatography (GPC) with the number of significant figures being two. In addition, FIG. 1 is the graph illustrating the dependence of the osmotic pressure difference on the EO number at each carbon number of the alkyl group at one terminal in the thermo-sensitive draw solute according to the embodiments. Here, the osmotic pressure difference is the difference in the osmotic pressure from 70 atm, which is the osmotic pressure of the sea water whose concentration as the concentrated water is 5% when the recovery yield of fresh water is 50%. Here, FIG. 1 indicates the osmotic pressures of the chemicals having an alkyl group at one terminal as well as the conventional diol, in which the cloud points and the molecular weights of these chemicals are identical but the structures thereof are different from each other. In FIG. 1, for example, "C4" means that the carbon number of the alkyl group at one terminal is 4.

[Table 2]

| | Comparative Example 1 | Comparative Example 2 | Comparative Example 3 | Example 1 | Example 2 | Example 3 | Example 4 | Example 5 | Example 6 | Example 7 |
|---|---|---|---|---|---|---|---|---|---|---|
| Carbon number of terminal alkyl group | 0 | 4 | 15 | 6 | 8 | 8 | 9 | 9 | 10 | 13 |
| Terminal alkyl group | - | Butyl | Isopentadecyl | Hexyl | 2-Ethylhexyl | 2-Ethylhexyl | 3,5,5-trimethylhexyl | 3,5,5-trimethylhexyl | Isodecyl | Isotridecyl |
| EO number | 20 | 23 | 27 | 26 | 25 | 26 | 25 | 24 | 25 | 25 |
| PO number | 17 | 13 | 7 | 11 | 12 | 10 | 10 | 10 | 11 | 10 |
| EO number/PO number ratio | 1.2 | 1.8 | 3. | 2.4 | 2.1 | 2.6 | 2.5 | 2.4 | 2.3 | 2.5 |
| Molecular weight | 1800 | 1800 | 180C | 1800 | 180C | 1800 | 1800 | 1800 | 1800 | 1800 |
| Cloud point [°C] 40% aqueous solution | 65 | 65 | Gelated | 65 | 65 | 65 | 65 | 65 | 65 | 65 |
| Osmotic pressure [atm] 80% aqueous solution at 40°C | 110 | 115 | Gelated | 163 | 142 | 152 | 152 | 145 | 142 | 142 |
| Viscosity [cP] 80% aqueous solution at 40°C | | | | 115 | 111 | 105 | 110 | 113 | 112 | 120 |

[Table 3]

| | Example 8 | Example 9 | Example 10 | Example 11 | Example 12 | Example 13 | Example 14 | Example 15 | Example 16 | Example 17 |
|---|---|---|---|---|---|---|---|---|---|---|
| Carbon number of terminal alkyl group | 8 | 8 | 8 | 8 | 8 | 8 | 8 | 13 | 8 | 10 |
| Terminal alkyl group | 2-Ethylhexyl | 2-Ethylhexyl | 2-Ethylhexyl | 2-Ethylhexyl | 2-Ethylhexyl | 2-Ethylhexyl | 2-Ethylhexyl | Isotridecyl | 2-Ethylhexyl | Decyl |
| EO number | 22 | 27 | 22 | 28 | 24 | 40 | 53 | 37 | 27 | 25 |
| PO number | 15 | 16 | 15 | 15 | 13 | 19 | 27 | 20 | 10 | 11 |
| EO number/PO number ratio | 1.5 | 1.7 | 1.5 | 1.9 | 1.8 | 2.1 | 2.0 | 1.9 | 2.7 | 2.3 |
| Molecular weight | 1800 | 2100 | 1900 | 2100 | 1900 | 2900 | 3900 | 2800 | 1800 | 1800 |
| Cloud point [°C] 40% aqueous solution | 55 | 55 | 55 | 55 | 60 | 60 | 60 | 60 | 70 | 65 |
| Osmotic pressure [atm] 80% aqueous solution at 40°C | 121 | 121 | 110 | 131 | 142 | 142 | 142 | 137 | 173 | 145 |
| Viscosity [cP] 80% aqueous solution at 40°C | 100 | 122 | 94 | 122 | 104 | 167 | 225 | 180 | 103 | 120 |

(Relation between the carbon number and the osmotic pressure)

As can be seen in Table 2, the alkyl groups at one terminal as follows were used: a butyl group (Comparative Example 2), an isopentadecyl group (Comparative Example 3), a hexyl group (Example 1), a 2-ethylhexyl group (Examples 2 and 3), a 3,5,5-trimethylhexyl group (Examples 4 and 5), an isodecyl group (Example 6), and an isotridecyl group (Example 7). From Table 2 and FIG. 1, it can be seen that the osmotic pressure increases when the one terminal is made to the alkyl groups. From FIG. 1, in the chemical of Comparative Example 2 in which the one terminal is made to the butyl group, it can be seen that the increase in the osmotic pressure is not so significant as compared with the diol in Comparative Example 1. On the other hand, in the chemical of Example 1 in which the hexyl group is used at one terminal, in the chemicals of Examples 2 and 3 in which the 2-ethylhexyl group is used at one terminal, in the chemicals of Examples 4 and 5 in which the 3,5,5-trimethylhexyl group is used at one terminal, in the chemical of Example 6 in which the isodecyl group is used at one terminal, and in the chemical of Example 7 in which the isotridecyl group is used at one terminal, it can be seen that the osmotic pressures are high. It is presumed that this is caused by an increase in the number of the added EO because the alkyl groups are hydrophobic. On the other hand, the chemical of Comparative Example 3 in which the one terminal is made to the isopentadecyl group was gelated when this was made to an aqueous solution. Therefore, the cloud point and the osmotic pressure thereof could not be measured; and thus, this is not suitable as the thermo-sensitive draw solute in the water treatment apparatus using the forward osmosis. Accordingly, it can be seen that the thermo-sensitive draw solutes of Examples 1 to 7 having the alkyl group with the carbon number of at least 6 and up to 13 at one terminal are suitable in the water treatment apparatus using the forward osmosis membrane.

(Relation between the osmotic pressure and the membrane permeation rate)

Next, the relation between the osmotic pressure and the membrane permeation rate of the thermo-sensitive draw solute will be explained. FIG. 2 is the graph illustrating the membrane permeation rates of the chemicals of Comparative Example 2 and Examples 1, 2, 4, 6, and 7 when the membrane permeation rate of Comparative Example 1 is taken as 1, as the standard. Here, the membrane permeation rate represents the permeation flow rate, which is the value obtained by dividing the permeation flow amount by the product of the membrane area and the time. The membrane permeation rate was measured using, as the water treatment apparatus, an experimental apparatus provided with a forward osmosis membrane, under the experimental conditions described below. From FIG. 2, it can be seen that the higher the osmotic pressure is, the faster is the membrane permeation rate.

<Membrane experimental conditions>

- Semipermeable membrane: HTI's triacetate cellulose membrane
- Water-containing solution: 4% Aqueous NaCl solution
- Draw solution: Aqueous solution of 80% of each thermo-sensitive draw solute
- Temperature: 40°C

(Relation between the carbon number and the amount of back-diffusion)

In the water treatment apparatus using the forward osmosis membrane, when the water-containing solution and the thermo-sensitive draw solute are contacted via the semipermeable membrane, the phenomenon that the thermo-sensitive draw solute diffuses to the side of the water-containing solution takes place. In this specification, the amount of the thermo-sensitive draw solute that diffuses to the side of the water-containing solution is called the amount of back-diffusion. When this amount of back-diffusion is large, there occur two problems. First, because of the back-diffusion of the thermo-sensitive draw solute, the supply frequency of the thermo-sensitive draw solute increases. The increase in the supply frequency is not desirable because it can increase the consumption of the chemical. Second, when the thermo-sensitive draw solute contaminates into the water-containing solution, depending on the contamination amount, it can influence the water quality in the discharge destination upon discharging the water-containing solution. The concentration that can influence the water quality in the discharge destination is different depending on the area and the place. Considering the effect to the environment, if equipment to remove the contaminated thermo-sensitive draw solute from the water-containing solution before discharge is further required, the equipment cost in the water treatment apparatus increases. In view of the above-mentioned, it is better that the amount of back-diffusion is smaller.

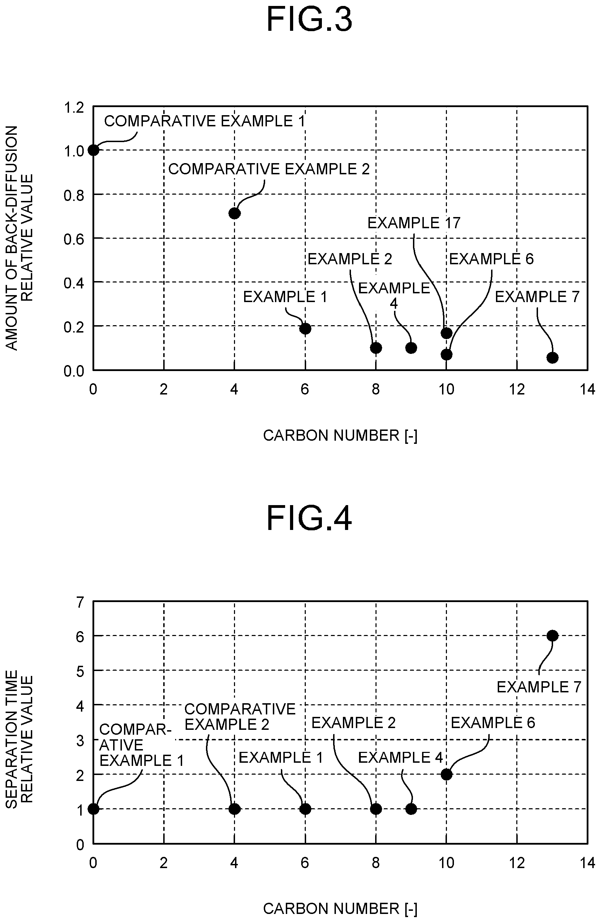

FIG. 3 is the graph illustrating measured results of the relative values of the amounts of back-diffusion at each carbon number of the terminal alkyl group in the thermo-sensitive draw solutes of Comparative Examples 1 and 2 and Examples 1, 2, 4, 6, 7, and 17 in which the molecular weights and the cloud points listed in Tables 2 and 3 are the same, when the amount of back-diffusion of the chemical (diol) in Comparative Example 1 is taken as 1. Here, the experimental conditions are the same as the conditions of the above-mentioned membrane experiments.

From FIG. 3, it can be seen that the amounts of back-diffusion are smaller in the thermo-sensitive draw solutes having the alkyl group at one terminal as compared with Comparative Example 1. In addition, the tendency can be seen that the larger the carbon number of the alkyl group at one terminal is, the smaller is the amount of back-diffusion. It can be seen that especially the amounts of back-diffusion in the case that the carbon number of the terminal alkyl group is 6 or more are decreased to 1/5 or less as compared with the amount of back-diffusion of Comparative Example 1. In view of the above-mentioned, it can be seen that the amount of back-diffusion is decreased when the thermo-sensitive draw solute has the alkyl group at one terminal in the structure thereof, and that when the carbon number of the terminal alkyl group is 6 or more, the amount of back-diffusion is significantly decreased. Further, the amount of back-diffusion in Example 6 in which $R^1$ is a branched monovalent alcohol is smaller as compared with Example 17 in which $R^1$ is a linear monovalent alcohol. It is presumed that this is caused because permeation of the chemical in the membrane is disturbed due to the steric hindrance of the molecule caused by branching. Accordingly, in view of the amount of back-diffusion, $R^1$ is preferably a branched monovalent alcohol.

(Relation between the separation time and the carbon number of the terminal alkyl group)

In the water treatment apparatus using the forward osmosis membrane, the separation process is carried out to separate between the solvent and the thermo-sensitive draw solute in a separation vessel by heating the diluted draw solution. In this separation process, when the separation time becomes longer, the equipment in the water treatment apparatus becomes larger thereby leading to an increase in the cost. Therefore, it is better that the separation time in the separation process is shorter. Here, the principle of the separation is as follows. First, when the temperature of the diluted draw solution is lower than the cloud point, a polymer chain is dissolved due to a strong interaction between water and the hydrophilic portion of ethylene oxide. On the other hand, when the temperature becomes higher than the cloud point, the interaction between water and the hydrophilic portion becomes unstable to cause shrinkage of the polymer chain thereby further leading to formation of a micelle. Upon association and agglomeration of the polymer chains, the solvent and the thermo-sensitive draw solute from each other. An increase in the carbon number of the terminal alkyl group enhances hydrophobicity in the terminal of the structural molecule of the thermo-sensitive draw solute. The enhancement of the hydrophobicity in the terminal causes some of the polymers to co-own the terminal groups between two adjacent micelles thereby working as a crosslink to connect among the micelles to form a network. Formation of the network causes an increase in the viscosity thereby leading to a decrease in the association number and to an increase in the time necessary to separate between water and the thermo-sensitive draw solute. The increase in the carbon number of the terminal alkyl chain enhances the thickening effect so that the possibility to prolong the separation time increases.

FIG. 4 is the graph illustrating the relative values of the separation times at each carbon number of the terminal alkyl group in the thermo-sensitive draw solutes of Comparative Examples 1 and 2 and Examples 1, 2, 4, 6, and 7, in which the molecular weights and the cloud points are the same, when the separation time in Comparative Example 1 is taken as 1. From FIG. 4, it can be seen that in the chemical of Example 7 in which the carbon number of the alkyl group at one terminal is 13, the separation time becomes about 3 to about 6 times longer as compared with the chemicals of Comparative Examples 1 and 2 and Examples 1, 2, 4, and 6. The increase in the separation time causes, among others, an increase in the equipment cost because the separation vessel to carry out the separation process needs to be made larger and an increase in the cost necessary for the chemical because the residence time is prolonged. Therefore, it is better that the separation time is shorter. Therefore, in view of the separation time, the carbon number of the terminal alkyl group is preferably 10 or less. Namely, the carbon number of the terminal alkyl group is preferably at least 6 and up to 10.

(Determination of the EO number/PO number ratio)

The EO number/PO number ratio is an important factor of the water absorption property and the cloud point of the thermo-sensitive draw solute. The EO group is hydrophilic and exhibits the drawing property of the thermo-sensitive agent, and the PO group is hydrophobic and exhibits the agglomeration property in the separation when it is heated. Therefore, when the EO number/PO number ratio is too small, the water absorption property is deteriorated to cause a decrease in the osmotic pressure; on the contrary, when the ratio is too large, the cloud point becomes higher.

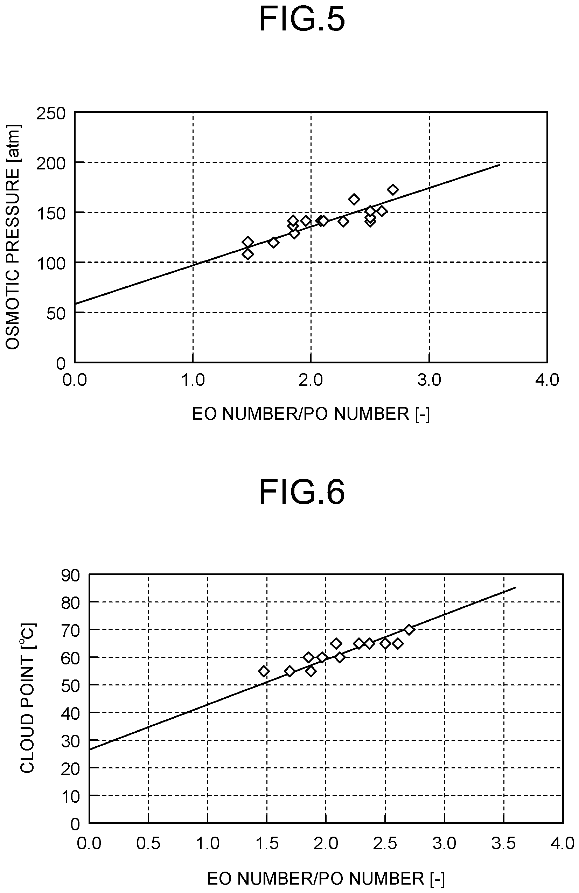

FIG. 5 is the graph illustrating, on the basis of Table 2 and Table 3, the relation of the osmotic pressure with the EO number/PO number ratio of the thermo-sensitive draw solute having an alkyl group at one terminal (a hexyl group, a 2-ethylhexyl group, a 3,5,5-trimethylhexyl group, an isodecyl group, or an isotridecyl group). From FIG. 5, it can be seen that the relation between the osmotic pressure and the EO number/PO number ratio can be expressed by the following formula (3).

$$\text{Osmotic pressure (atm)} = (\text{EO number/PO number ratio}) \times 38 + 60 \tag{3}$$

As mentioned before, in the sea water desalination in a warm region, because the osmotic pressure is preferably 70 atm or higher, the EO number/PO number ratio is preferably 0.3 or more from the formula (3). In the sea water desalination in a tropical region, because the osmotic pressure is preferably 80 atm or higher, the EO number/PO number ratio is preferably 0.5 or more from the formula (3).

FIG. 6 is the graph illustrating, on the basis of Table 2 and Table 3, the relation of the cloud point with the EO number/PO number ratio of the thermo-sensitive draw solute having an alkyl group at one terminal (a hexyl group, a 2-ethylhexyl group, a 3,5,5-trimethylhexyl group, an isodecyl group, or an isotridecyl group). From FIG. 6, it can be seen that the relation between the cloud point and the EO number/PO number ratio can be expressed by the following formula (4).

$$\text{Cloud point } (^{\circ}\text{C}) = (\text{EO number/PO number ratio}) \times 16 + 27 \tag{4}$$

From the formula (4), it can be seen that when the EO number/PO number ratio is 0.3 or more, the cloud point is 30°C or higher. In other words, it can be seen, in the range of 30°C or higher that is derived from the formula (3) on the basis of the above-mentioned osmotic pressure, the above-mentioned temperature requirement of the cloud point can be satisfied. In addition, as mentioned before, the cloud point of the thermo-sensitive draw solute is typically 80°C or lower, preferably 75°C or lower, while more preferably at least 50°C and up to 70°C. From these temperature ranges of the cloud point and from the formula (4), the EO number/PO number ratio is typically 3.3 or less, preferably 2.9 or less, while more preferably 2.7 or less. From the above-mentioned, the EO number/PO number ratio is typically at least 0.3 and up to 3.3, preferably at least 0.5 and up to 2.9, while more preferably at least 1.5 and up to 2.7.

(Relation between the molecular weight and the viscosity)

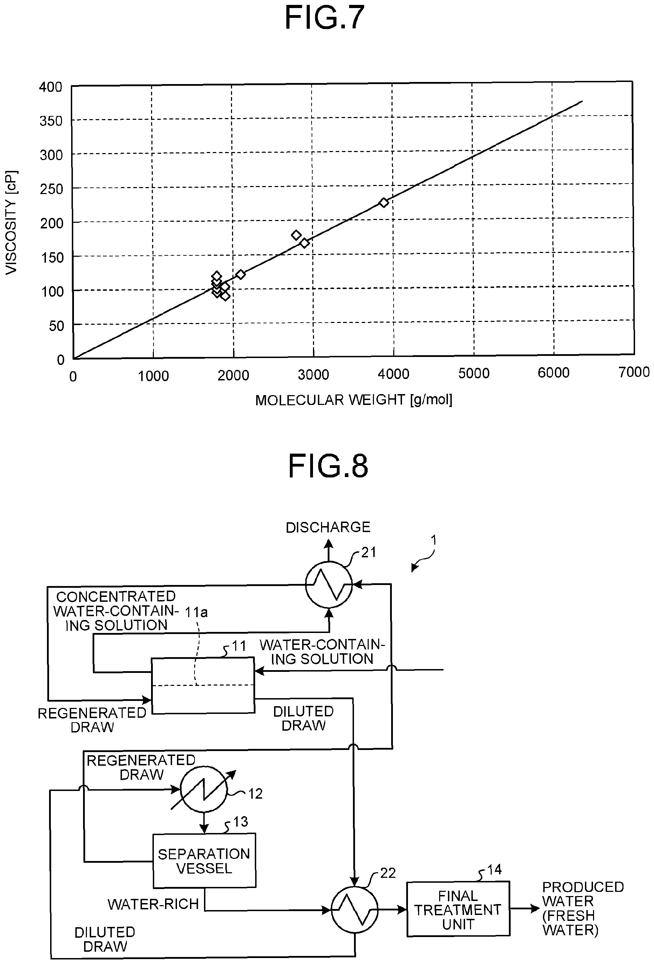

FIG. 7 is the graph illustrating, on the basis of Table 2 and Table 3, the dependence of the viscosity in the aqueous solution of the thermo-sensitive draw solute with the concentration of 80% at 40°C on the molecular weight. As mentioned before, when the viscosity of the draw solution is, for example, more than 350 cP, a significant increase in the separation time is resulted due to the increase in the viscosity. From FIG. 7, it can be seen that the molecular weight of the thermo-sensitive draw solute corresponding to the viscosity of 350 cP is 6000. Namely, from FIG. 7, it can be seen that the molecular weight of the thermo-sensitive draw solute is preferably 6000 or less. In addition, as mentioned before, when the viscosity of the draw solution including the thermo-sensitive draw solute is more than 230 cP, a general volute pump cannot be used so that an expensive pump for a high viscosity is needed. Therefore, the viscosity of the thermo-sensitive draw solute is preferably 230 cP or less. In this case, from FIG. 7, it can be seen that the molecular weight of the thermo-sensitive draw solute is preferably 4000 or less. In addition, in the water treatment apparatus using the forward osmosis membrane, there is a case of including the process in which after the thermo-sensitive draw solute having drawn water is separated by heating, a membrane treatment is carried out to remove the residual thermo-sensitive draw solute so as to recover a finally produced solution. When the molecular weight of the residual thermo-sensitive draw solute is too small, a possibility increases that this molecular weight is less than the cut-off molecular weight of the forward osmosis membrane thereby causing the problem that the thermo-sensitive draw solute cannot be removed. Therefore, the molecular weight of the thermo-sensitive draw solute needs to be larger than the cut-off molecular weight of the membrane used in the membrane treatment. From this viewpoint, specifically, the molecular weight of the thermo-sensitive draw solute needs to be 500 or more. In addition, in the case when a UF membrane is used in order to lower the operational pressure as described before, the molecular weight of the thermo-sensitive draw solute is more preferably 1000 or more. From the above-mentioned, it can be seen that the molecular weight of the thermo-sensitive draw solute is preferably at least 500 and up to 6000, while more preferably at least 1000 and up to 4000.

With the thermo-sensitive draw solute of the embodiments as explained above, the thermo-sensitive draw solute is formed of the polymer of the ethylene oxide group with at least any one kind selected from the propylene oxide group and the butylene oxide group, in which an alkyl group is at one terminal of the molecule of the thermo-sensitive draw solute. Therefore, the number of the ethylene oxide (EO number) added due to hydrophobicity of the alkyl group is more as compared with the thermo-sensitive draw solute having the same molecular weight and the same cloud point but not having the alkyl group at one terminal. Ethylene oxide is the molecule exhibiting the water absorption property, in which by having the alkyl group at one terminal the EO number can be increased so that the osmotic pressure can be increased. Further, because the carbon number of the alkyl group at one terminal is made to at least 6 and up to 13, the cloud point can be lowered while obtaining a high osmotic pressure.

(Water treatment apparatus)

(First embodiment)

Next, a water treatment apparatus according to a first embodiment using the thermo-sensitive draw solute according to the embodiment of the present invention as described above will be explained. FIG. 8 is the block diagram schematically illustrating a water treatment apparatus 1 according to the first embodiment. As illustrated in FIG. 8, the water treatment apparatus 1 according to the first embodiment is provided with a membrane module 11, a heater 12, a separation vessel 13, a final treatment unit 14, and heat-exchangers 21 and 22.

The membrane module 11 serving as the forward osmosis unit is a container having a semipermeable membrane 11a installed therein; the shape of the container being, for example, a cylinder-like or a box-like. Inside the membrane module 11 is divided into two compartments by the semipermeable membrane 11a. The membrane module 11 can have various forms; illustrative examples thereof include a spiral module type form, a stacked module type form, and a hollow fiber module type form. As for the membrane module 11, heretofore a known semipermeable membrane apparatus as well as a commercially available product may be used.

The semipermeable membrane 11a installed in the membrane module 11 is preferably the one that can selectively permeate water, so that the forward osmosis (FO) membrane may be used, but the reverse osmosis (RO) membrane may be used as well. The material of the separation layer in the semipermeable membrane 11a is not particularly restricted; illustrated examples of the material include a cellulose acetate type, a polyamide type, a polyethylene imine type, a polysulfone type, and a polybenzoimidazole type. The semipermeable membrane 11a may be formed of only one material (one layer) used in the separation layer, or formed of two or more layers having a supporting layer that physically supports the separation layer, not substantially contributing to the separation together with the separation layer. Illustrated examples of the supporting layer include general unwoven clothes formed of the material such as a polysulfone type, a polyketone type, a polyethylene type, and a polyethylene terephthalate type. Here, the form of the semipermeable membrane 11a is not particularly restricted either, so that any type of the membrane such as a flat membrane, a tubular membrane, and a hollow fiber membrane may be used.

Inside the membrane module 11, the water-containing solution may be flowed in one compartment divided by the semipermeable membrane 11a, and the draw solution as the water absorbing solution including the thermo-sensitive draw solute may be flowed in the other compartment. The introduction pressure of the draw solution into the membrane module 11 is at least 0.1 MPa and up to 0.5 MPa, while in the first embodiment, the introduction pressure is, for example, 0.2 MPa. The water-containing solution is mainly sea water; but this is not particularly restricted so far as it includes water as the solvent; and thus, brine, brackish water, industrial waste water, produced water, sewage, or these waters having been subjected to the filtration treatment as needed may be used.

As for the draw solution, a solution mainly including the thermo-sensitive draw solute formed of the polymer having at least one cloud point according to the above-mentioned embodiments may be used. In the first embodiment, the draw solution is used to draw water from the water-containing solution. Namely, the drawing substance to draw water is a solute of the draw solution; and thus, the draw solution itself may be only a drawing substance or a solution including a drawing substance.

With this, in one compartment of the membrane module 11, water is drawn from the water-containing solution to the draw solution, and thereby the draw solution that is diluted (diluted draw solution) is flowed out therefrom.

On the other hand, in the other compartment of the membrane module 11, the water-containing solution that is concentrated by migration of the water to the draw solution (concentrated water-containing solution) is flowed out therefrom.

The heater 12 serving as a heating unit of the diluted draw solution is installed in the upstream side of the separation vessel 13 along the flow direction of the diluted draw solution. The heater 12 heats the diluted draw solution up to the temperature above the cloud point; the diluted draw solution having been flowed out from the membrane module 11 and been heat-exchanged by the heat-exchanger 22. The diluted draw solution that is heated up to the temperature above the cloud point by the heater 12 is phase-separated into water and the thermo-sensitive draw solute, which is a polymer.

In the separation vessel 13 serving as a water separation unit, the diluted draw solution having been phase-separated by the heater 12 is separated into the solution mainly including water as the separated water (water-rich solution) and the draw solution mainly including the thermo-sensitive draw solute and having the water content lower than the water-rich solution. The draw solution having the water content lower than the water-rich solution is fed as the draw solution to be reused (hereinafter, regenerated draw solution) to the membrane module 11 via the heat-exchanger 21.

The heat-exchanger 21 is installed in the downstream side of the separation vessel 13 along the flow direction of the regenerated draw solution and in the downstream side of the membrane module 11 along the flow direction of the concentrated water-containing solution. In this way, the heat-exchanger 21 undergoes the heat-exchange between the regenerated draw solution that is flowed out from the separation vessel 13 and the concentrated water-containing solution that passes through the membrane module 11. The flow amount of the concentrated water-containing solution that is flowed into the heat-exchanger 21 is controlled such that the temperature of the regenerated draw solution that is fed into the membrane module 11 may become a prescribed temperature. Specifically, a bypass valve (not illustrated) is installed in the flow path through which the concentrated water-containing solution passes in the heat-exchanger 21; and by controlling the flow amount of the concentrated water-containing solution that flows through the bypass valve, the temperature of the regenerated draw solution is controlled at a prescribed temperature. The temperature of the regenerated draw solution to be fed to the membrane module 11 is controlled in the temperature range of at least 25°C and up to 50°C, for example, at about 40°C, as the prescribed temperature.

The heat-exchanger 22 is installed in the downstream side of the membrane module 11 along the flow direction of the diluted draw solution and in the downstream side of the separation vessel 13 along the flow direction of the water-rich solution obtained by the separation vessel 13. The heat-exchanger 22 undergoes the heat-exchange between the diluted draw solution that is flowed out from the membrane module 11 and the water-rich solution that is obtained by the separation vessel 13.

The final treatment unit 14 serving as a separation treatment unit is formed of, for example, a coalescer, an active carbon absorbing unit, an ultrafiltration membrane unit, a nano-filtration membrane (NF membrane) unit, or a reverse osmosis membrane unit.
The final treatment unit 14 separates the residual thermo-sensitive draw solute from the water-rich solution that is flowed out from the separation vessel 13 so as to produce fresh water as the produced water. The polymer solution including the thermo-sensitive draw solute that is separated by the final treatment unit 14 may be either discarded or introduced into the diluted draw solution in the upstream side of the heater 12 or in the upstream side of the heat-exchanger 22. It is also possible to discard part of the separated polymer solution and to introduce the rest of the polymer solution into the diluted draw solution as the draw solution. Here, various methods may be used for introduction of the polymer solution into the diluted draw solution; the method includes, for example, not only the method to introduce it into the pipe through which the diluted draw solution flows but also the method to introduce it into a tank (not illustrated) that stores the diluted draw solution.

(Water treatment method)

Next, the water treatment method using the water treatment apparatus 1 according to the first embodiment that is configured as described above will be explained.

(Forward osmosis process)

In the membrane module 11 serving as the forward osmosis unit, the forward osmosis process is carried out. Namely, in the membrane module 11, the water-containing solution is contacted with the regenerated draw solution via the semipermeable membrane 11a. By so doing, in the membrane module 11 due to the difference in the osmotic pressures, the water in the water-containing solution permeates through the semipermeable membrane 11a thereby migrating to the regenerated draw solution. Namely, in the membrane module 11, from one compartment into which the water-containing solution is fed, the concentrated water-containing solution that is concentrated by migration of the water into the regenerated draw solution is flowed out. From the other compartment to which the regenerated draw solution is fed, the diluted draw solution that is diluted by migration of the water from the water-containing solution is flowed out. In the membrane module 11, heat-exchange is also carried out so that the temperature is raised from the inflow side of the water-containing solution toward the outflow side of the concentrated water-containing solution, while the temperature is lowered from the inflow side of the regenerated draw solution toward the outflow side of the diluted draw solution.

(Forward osmosis side heat-exchange process)

In the heat-exchanger 21 serving as a forward osmosis side heat-exchange unit, a forward osmosis side heat-exchange process is carried out. Namely, the concentrated water-containing solution that is obtained by having the water-containing solution passed through the membrane module 11 is fed to the heat-exchanger 21. On the other hand, the regenerated draw solution that is flowed out from the separation vessel 13 is fed to the heat-exchanger 21. In the first embodiment, the temperature of the regenerated draw solution is controlled at a prescribed temperature, specifically, for example, about 40°C by the heat-exchanger 21. As described later, the diluted draw solution that is heated is flowed into the separation vessel 13. Because of this, the temperature of the regenerated draw solution that is flowed out from the separation vessel 13 is higher than the temperature of the concentrated water-containing solution. Therefore, the temperature of the regenerated draw solution is lowered in the heat-exchanger 21. In order to lower the temperature of the regenerated draw solution to a prescribed temperature, the flow amount of the concentrated water-containing solution to be subjected to the heat-change in the heat-exchanger 21 is controlled. Namely, in the heat-exchanger 21, the regenerated draw solution is cooled by the concentrated water-containing solution, while the concentrated water-containing solution is heated by the regenerated draw solution. Here, by installing a blow valve as the control valve (not illustrated) in somewhere between the membrane module 11 and the heat-exchanger 21, the flow amount of the concentrated water-containing solution to be flowed into the heat-exchanger 21 may be controlled. The regenerated draw solution having the temperature thereof lowered by the heat-exchange is fed to the other compartment of the membrane module 11. On the other hand, the concentrated water-containing solution having heated to the temperature of, for example, 55 to 70°C by the heat-change is discharged to outside the system.

(Heating process)

In the heater 12 serving as the heating unit, the heating process is carried out. Namely, after the temperature of the diluted draw solution that is obtained by diluting the regenerated draw solution in the forward osmosis process is raised in the outflow side heat-exchange process to be mentioned later, it is further heated to the temperature equal to or above the cloud point by the heater 12. By so doing, at least part of the thermo-sensitive draw solute agglomerates thereby effecting the phase separation. The heating temperature in the heating process can be adjusted by controlling the heater 12. Here, the heating temperature is equal to or lower than the boiling point of water, so that the temperature is preferably 100°C or lower under an atmospheric pressure; and in the first embodiment, the temperature is at least the cloud point and up to 100°C, for example, at 88°C.

(Water separation process)

In the separation vessel 13 serving as the water separation unit, the water separation process is carried out. Namely, in the separation vessel 13, the diluted draw solution is separated into the water-rich solution including a large amount of water and the regenerated draw solution having been concentrated thereby including the highly concentrated thermo-sensitive draw solute. Here, the pressure in the separation vessel 13 is, for example, an atmospheric pressure. The phase separation between the water-rich solution and the regenerated draw solution can be effected by allowing them to leave at the liquid temperature equal to or above the cloud point. In the first embodiment, the liquid temperature in the separation vessel 13 is at least the cloud point and up to 100°C, for example, 88°C. The concentrated draw solution that is separated from the diluted draw solution is fed as the regenerated draw solution to the membrane module 11 via the heat-exchanger 21. The draw concentration of the regenerated draw solution is, for example, in the range of 60 to 95%. On the other hand, the water-rich solution separated from the diluted draw solution is fed to the final treatment unit 14 via the heat-exchanger 22. In the water-rich solution, for example, the draw concentration is 1% and the water concentration is 99%.

(Outflow side heat-exchange process)

In the heat-exchanger 22 serving as an outflow side heat-exchange unit, an outflow side heat-exchange process is carried out. Namely, first, the diluted draw solution that is flowed out from the membrane module 11 is fed to the heat-exchanger 22. On the other hand, the water-rich solution that is obtained in the separation vessel 13 is fed to the heat-exchanger 22. In the first embodiment, the temperature of the water-rich solution is adjusted at a prescribed temperature by means of the heat-exchanger 22, specifically at least 30°C and up to 50°C, for example about 45°C. As described before, the water separation process in the separation vessel 13 is carried out at the liquid temperature of at least cloud point and up to 100°C. Therefore, the temperature of the water-rich solution that is flowed out from the separation vessel 13 is higher than the temperature of the diluted draw solution that is flowed out from the membrane module 11 after having been cooled in the heat-exchanger 22. On the other hand, the treatment temperature in the final treatment unit 14 installed in the later stage is, for example, at least 20°C and up to 50°C, while preferably at least 35°C and up to 45°C, for example, 45°C in the first embodiment. Therefore, the temperature adjustment is carried out in the heat-exchanger 22 so as to lower the temperature of the water-rich solution to the treatment temperature of the final treatment unit 14. Namely, in the heat-exchanger 22, the water-rich solution is cooled by the diluted draw solution, while the diluted draw solution is heated by the water-rich solution.

(Final treatment process)

In the final treatment unit 14 serving as the separation treatment unit, the final treatment process is carried out as the separation treatment process. In the water-rich solution that is separated in the separation vessel 13, the thermo-sensitive draw solute can be remained. Therefore, in the final treatment unit 14, the polymer solution that can be the separation-treated draw solution is separated from the water-rich solution. By so doing, the produced water such as fresh water can be obtained.

The produced water that is separated from the water-rich solution is supplied to a required outside use as the final product that is obtained from the water-containing solution. Here, the separation-treated draw solution that is separated from the produced water in the final treatment unit 14 is a polymer solution with the draw concentration of about 0.5% to about 25%; and this may be either discarded to outside or introduced into the upstream side of the heater 12 or of the heat-exchanger 22 along the flow direction of the diluted draw solution. It is also possible to discard part of the polymer solution and introduce the rest of the polymer solution into the upstream side of the heater 12 or of the heat-exchanger 22 along the flow direction of the diluted draw solution.

As explained above, with the water treatment apparatus 1 according to the first embodiment of the present invention, the heat-exchanger 21 is installed in order to cool the regenerated draw solution by the concentrated water-containing solution. By so doing, it is not necessary to separately install a cooling mechanism to cool the regenerated draw solution that is flowed out from the separation vessel 13; and in addition, the energy balance in the water treatment apparatus 1 can be stabilized. In addition, by using the concentrated water-containing solution as the cooling water, intake of the water-containing solution for cooling is not required so that the energy to cool the regenerated draw solution can be reduced; and thus, the energy necessary in the water treatment can be further reduced.

(Second embodiment)

(Water treatment apparatus and water treatment method)

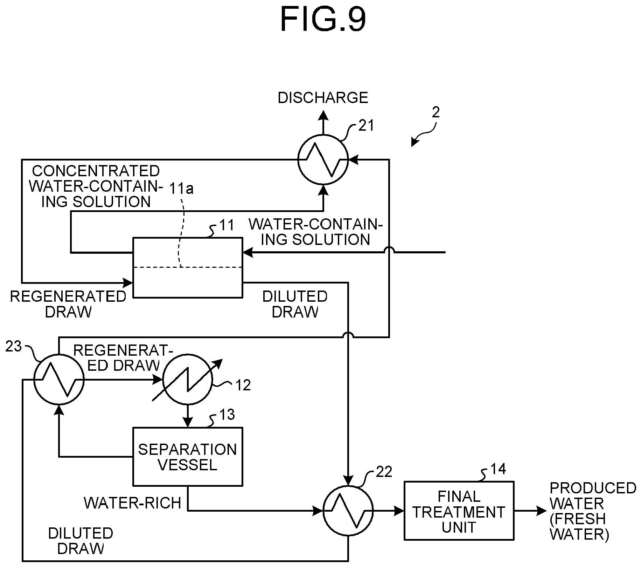

Next, a water treatment apparatus according to a second embodiment using the thermo-sensitive draw solute according to the embodiments of the present invention as described above will be explained. FIG. 9 illustrates a water treatment apparatus 2 according to the second embodiment. As can be seen in FIG. 9, similarly to the first embodiment, the water treatment apparatus 2 is provided with the membrane module 11 having the semipermeable membrane 11a installed therein, the heater 12, the separation vessel 13, the final treatment unit 14, and the heat-exchangers 21 and 22. In the water treatment apparatus 2, unlike the first embodiment, the heat-exchanger 23 is further installed in the downstream side of the heat-exchanger 22 and in the upstream side of the heater 12 along the flow direction of the diluted draw solution, and in the downstream side of the separation vessel 13 and in the upstream side of the heat-exchanger 21 along the flow direction of the regenerated draw solution.

By means of the heat-exchanger 23 serving as a subsequent heat-exchange unit, a subsequent heat-exchange process is carried out. Namely, in the water treatment method according to the second embodiment, first, the diluted draw solution that is flowed out from the membrane module 11 is heat-exchanged with the hot water-rich solution in the heat-exchanger 22 so as to raise the temperature thereof. Then, as the subsequent heat-exchange process, in the heat-exchanger 23, the diluted draw solution is heat-exchanged with the regenerated draw solution whose temperature is almost the same as the temperature of the water-rich solution so as to raise the temperature thereof. The diluted draw solution is further heated to the temperature of at least cloud point and up to 100°C by means of the heater 12. The water treatment method other than the above-mentioned is the same as that of the first embodiment.

According to the second embodiment, because the heat-exchange is carried out by means of the heat-exchangers 21 and 22, the same effect as the first embodiment can be obtained. In addition, because by means of the heat-exchanger 23, the temperature of the diluted draw solution to be fed to the separation vessel 13 is raised with lowering the temperature of the regenerated draw solution that is flowed out from the separation vessel 13, the temperature width to be raised upon heating the diluted draw solution by means of the heater 12 can be made smaller as compared with the first embodiment. Accordingly, the energy necessary to heat by means of the heater 12 can be reduced, so that in the water treatment apparatus 2 the energy consumed in heating can be further reduced.

(Third embodiment)

(Water treatment apparatus and water treatment method)

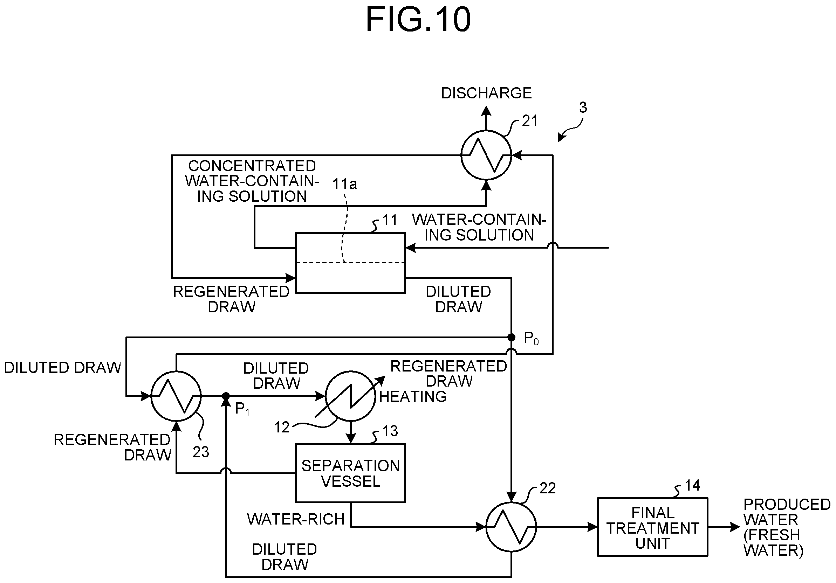

Next, a water treatment apparatus according to a third embodiment using the thermo-sensitive draw solute according to the embodiments of the present invention as described above will be explained. FIG. 10 illustrates a water treatment apparatus 3 according to the third embodiment. As can be seen in FIG. 10, similarly to the second embodiment, the water treatment apparatus 3 is provided with the membrane module 11 having the semipermeable membrane 11a installed therein, the heater 12, the separation vessel 13, the final treatment unit 14, and the heat-exchangers 21, 22, and 23. In the water treatment apparatus 3, unlike the first and the second embodiments, the branching point $P_0$ is

arranged in the pipe in the downstream side of the membrane module 11 along the flow direction of the diluted draw solution. At the branching point $P_0$, the diluted draw solution is branched out at least into two directions; one pipe is connected to the heat-exchanger 22, and the other pipe is connected to the heat-exchanger 23. On the other hand, the converging point $P_1$ at which the diluted draw solutions having passed through the heat-exchangers 22 and 23 are converged is arranged in the pipe in the upstream side of the heater 12 along the flow direction of the diluted draw solution. At the converging point $P_1$, the diluted draw solutions that are branched out are converged.

The heat-exchangers 22 and 23 serving as parallel heat-exchange unit are configured such that the diluted draw solutions can be heat-exchanged with other solutions. By means of the heat-exchangers 22 and 23, the parallel heat-exchange processes are carried out. Namely, in the water treatment method according to the third embodiment, the diluted draw solution that is flowed out from the membrane module 11 is branched out at the branching point $P_0$ of the pipe in the upstream side of the heat-exchangers 22 and 23. The diluted draw solution flowing through one branched pipe is fed to the heat-exchanger 22 so as to be heat-exchanged with the hot water-rich solution so that the temperature thereof is raised. The diluted draw solution flowing through the other pipe that is branched out at the branching point $P_0$ is fed to the heat-exchanger 23 so as to be heat-exchanged with the regenerated draw solution whose temperature is almost the same as that of the water-rich solution, so that the temperature thereof is raised. In other words, after the diluted draw solution that is flowed out from the membrane module 11 is branched out at the branching point $P_0$, as the parallel heat-exchange process, these solutions pass through in parallel the heat-exchangers 22 and 23, and thereby they are heat-exchanged with the water-rich solution and with the regenerated draw solution, respectively. By so doing, the flow amount of the diluted draw solution to be heated by the regenerated draw solution and the flow amount of the diluted draw solution to be heated by the water-rich solution can be reduced as compared with the first and the second embodiments, so that the temperature width to be raised can be widened.

The diluted draw solutions having passed through in parallel the heat-exchangers 22 and 23 converge at the converging point $P_1$, which is in the downstream side of the heat-exchangers 22 and 23 and in the upstream side of the heater 12. Here, the flow ratio of the one diluted draw solution and the other diluted draw solution, which are branched out at the branching point $P_0$, is controlled by means of a control valve (not illustrated) installed near the branching point $P_0$. Specifically, the flow ratio of the diluted draw solutions at the branching point $P_0$ is controlled by means of the control valve such that the temperature of one diluted draw solution and the temperature of the other diluted draw solution may be almost the same at the converging point $P_1$. The diluted draw solution having been converged at the converging point $P_1$ is heated to the temperature of at least cloud point and up to 100°C by means of the heater 12. The other compositions are the same as those of the first embodiment.

According to the third embodiment, the diluted draw solution that is flowed out from the membrane module 11 is branched out so as to effect the heat-exchange with the water-rich solution by means of the heat-exchanger 22 while effecting the heat-exchange with the regenerated draw solution by means of the heat-exchanger 23, so that the temperatures of the diluted draw solutions are raised in parallel. By so doing, the diluted draw solutions can be heated to a further higher temperature in the upstream side of the heater 12 as compared with the first and the second embodiments, so that the temperature width to be raised upon heating the diluted draw solution by means of the heater 12 can be made further narrower as compared with the first and the second embodiments. Accordingly, the energy necessary for heating by means of the heater 12 can be reduced further, so that the energy consumed for heating in the water treatment apparatus 3 can be further reduced.

The embodiments of the present invention have been specifically explained as described above, but the present invention is not limited to the embodiments described above, so that various modifications thereof based on the technological concept of the present invention are possible. For example, the numerical values mentioned in the above-mentioned embodiments are mere examples, so that, if necessary, the numerical values different from these values may be used. In addition, the present invention is not restricted by the descriptions and drawings that constitute part of the disclosure of the present invention according to the embodiments.

It is noted here that in the water treatment apparatuses 1, 2, and 3 according to the first to the third embodiments as mentioned above, a cooling mechanism such as a cooling tower may be separately installed. In this case, the cooling solution that is cooled by the cooling tower may be fed to the heat-exchanger 21 so as to carry out the heat-change between the cooling solution and the regenerated draw solution. In addition, in the case when the cooling mechanism is separately installed in the water treatment apparatuses 1, 2, and 3, the heat-exchange may be carried out between the water-rich solution and the cooling solution by a heat-exchanger newly installed in the upstream side of the final treatment unit 14 and in the downstream side of the heat-exchanger 22.

Industrial Applicability

The thermo-sensitive draw solute, the water treatment method, and the water treatment apparatus according to the present embodiments and examples can be widely used in water treatment of sea water desalination and water treatment for the purpose of reusing sewage water, gas and oil field waste water, produced water and industrial waste water, in agriculture and industry. Reference Signs List

| | |
|---|---|
| 1, 2, 3 | water treatment apparatus |
| 11 | membrane module |
| 11a | semipermeable membrane |
| 12 | heater |
| 13 | separation vessel |
| 14 | final treatment unit |
| 21, 22, 23 | heat-exchanger |

**Claims**

1. A thermo-sensitive draw solute comprising a polyoxyalkylene adduct represented by a general formula (1) :

$$R^1O(AO)_nR^2 \qquad (1)$$

where $R^1$ denotes a residue after withdrawal of a hydroxy group from a monovalent alcohol having a carbon number ranging from 6 to 13, $R^2$ denotes a hydrogen atom or denotes an alkyl group or an alkenyl group having a carbon number ranging from 1 to 13, AO denotes an oxyalkylene group having a carbon number ranging from 2 to 4, n denotes an average added mole number of an alkylene oxide ranging from 1 to 235, and where n is two or more, the two or more AOs may be the same or different from each other.

2. The thermo-sensitive draw solute according to claim 1, wherein $R^1$ in the polyoxyalkylene adduct represented by the general formula (1) is a residue of an aliphatic monovalent alcohol having a carbon number ranging from 6 to 13.

3. The thermo-sensitive draw solute according to claim 1 or 2, wherein $R^1$ in the polyoxyalkylene adduct represented by the general formula (1) is a residue of an aliphatic linear monovalent alcohol having a carbon number ranging from 6 to 13.

4. The thermo-sensitive draw solute according to claim 1 or 2, wherein $R^1$ in the polyoxyalkylene adduct represented by the general formula (1) is a residue of an aliphatic branched monovalent alcohol having a carbon number ranging from 6 to 13.

5. The thermo-sensitive draw solute according to any one of claims 1 to 4, wherein the AO in the polyoxyalkylene adduct represented by the general formula (1) is represented by a general formula (2):

$$-(A^1O)_x/(A^2O)_y/(A^3O)_z- \qquad (2)$$

where $A^1O$ denotes an oxyethylene group, $A^2O$ denotes an oxypropylene group, $A^3O$ denotes an oxybutylene group, x denotes an average added mole number of an ethylene oxide ranging from 1 to 100, y denotes an average added mole number of a propylene oxide ranging from 0 to 80, z denotes an average added mole number of a butylene oxide ranging from 0 to 55, y is equal to 2z, y and z are not zero at the same time, and the adduct forms of $A^1O$, $A^2O$, and $A^3O$ may be a random form, a block form, or a form including both the random form and the block form.

6. The thermo-sensitive draw solute according to claim 5, wherein in the polyoxyalkylene adduct represented by the general formula (1),
when AOs are the oxyethylene group and the oxypropylene group, x/y ranges from 0.3 to 3.3,
when AOs are the oxyethylene group and the oxybutylene group, x/2z ranges from 0.3 to 3.3, and
when AOs are the oxyethylene group, the oxypropylene group, and the oxybutylene group, x/(y+2z) ranges from 0.3 to 3.3.

7. The thermo-sensitive draw solute according to claim 5, wherein in the polyoxyalkylene adduct represented by the general formula (1),
when AOs are the oxyethylene group and the oxypropylene group, x/y ranges from 0.5 to 2.9,
when AOs are the oxyethylene group and the oxybutylene group, x/2z ranges from 0.5 to 2.9, and
when AOs are the oxyethylene group, the oxypropylene group, and the oxybutylene group, x/(y+2z) ranges from 0.5 to 2.9.

8. The thermo-sensitive draw solute according to claim 5, wherein in the polyoxyalkylene adduct represented by the general formula (1),
when AOs are the oxyethylene group and the oxypropylene group, x/y ranges from 1.5 to 2.7,
when AOs are the oxyethylene group and the oxybutylene group, x/2z ranges from 1.5 to 2.7, and
when AOs are the oxyethylene group, the oxypropylene group, and the oxybutylene group, x/(y+2z) ranges from 1.5 to 2.7.

9. The thermo-sensitive draw solute according to any one of claims 1 to 8, wherein a molecular weight of the polyoxyalkylene adduct ranges from 500 to 6000.

10. The thermo-sensitive draw solute according to any one of claims 1 to 8, wherein a molecular weight of the polyoxyalkylene adduct ranges from 1000 to 4000.

11. The thermo-sensitive draw solute according to any one of claims 1 to 10, wherein a cloud point of the polyoxyalkylene adduct ranges from 30°C to 80°C.

12. The thermo-sensitive draw solute according to any one of claims 1 to 10, wherein a cloud point of the polyoxyalkylene adduct ranges from 40°C to 75°C.

13. The thermo-sensitive draw solute according to any one of claims 1 to 12, wherein the thermo-sensitive draw solute is used as a drawing substance in production of fresh water by a forward osmosis method.

14. A water treatment method to separate water from a water-containing solution including water as a solvent by using the thermo-sensitive draw solute according to any one of claims 1 to 13, the water treatment method comprising:

   a forward osmosis process that permeates water from the water-containing solution to a draw solution including the thermo-sensitive draw solute through a semipermeable membrane to form a diluted draw solution;
   a heating process that heats the diluted draw solution to a temperature equal to or higher than a cloud point of the thermo-sensitive draw solute; and
   a water separation process that separates a separated water from the diluted draw solution that is heated at the heating process.

15. A water treatment apparatus to separate water from a water-containing solution including water as a solvent by using the thermo-sensitive draw solute according to any one of claims 1 to 13, the water treatment apparatus comprising:

   a forward osmosis unit configured to permeate water from the water-containing solution to a draw solution including the thermo-sensitive draw solute through a semipermeable membrane to form a diluted draw solution;
   a heating unit configured to heat the diluted draw solution to a temperature equal to or higher than a cloud point of the thermo-sensitive draw solute; and
   a water separation unit configured to separate a separated water from the diluted draw solution that is heated by the heating unit.

# FIG.1

CLOUD POINT 65°C, MOLECULAR WEIGHT 1800

■ DIOL
● C4
◇ C6
△ C8
✕ C9
✱ C10
○ C13

# FIG.2

# FIG.3

# FIG.4

## FIG.5

## FIG.6

# FIG.7

# FIG.8

# FIG.9

# FIG.10

DISCHARGE

CONCENTRATED WATER-CONTAINING SOLUTION

WATER-CONTAINING SOLUTION

REGENERATED DRAW

DILUTED DRAW

DILUTED DRAW

DILUTED DRAW

REGENERATED DRAW

REGENERATED DRAW

DILUTED DRAW

HEATING

SEPARATION VESSEL

WATER-RICH

DILUTED DRAW

FINAL TREATMENT UNIT

PRODUCED WATER (FRESH WATER)

EP 3 845 295 A1

## INTERNATIONAL SEARCH REPORT

| International application No. |
| --- |
| PCT/JP2019/030659 |

**A. CLASSIFICATION OF SUBJECT MATTER**
Int.Cl. B01D61/00(2006.01)i, C02F1/44(2006.01)i, C09K3/00(2006.01)i
According to International Patent Classification (IPC) or to both national classification and IPC

**B. FIELDS SEARCHED**

Minimum documentation searched (classification system followed by classification symbols)
Int.Cl. B01D61/00, C02F1/44, C09K3/00

| Documentation searched other than minimum documentation to the extent that such documents are included in the fields searched | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2017-148734 A (ASAHI KASEI CORPORATION) 31 August 2017, claims 1, 5, 8, paragraphs [0020], [0023], [0026], fig. 1 (Family: none) | 1-3, 5-9, 13-15 |
| A | | 4, 10-12 |
| X | WO 2018/150690 A1 (KOBE UNIVERSITY) 23 August 2018, claims 1, 6, paragraphs [0028]-[0031], [0045], [0056], fig. 1 (Family: none) | 1-3, 5, 11-15 |
| A | | 4, 6-10 |

☒ Further documents are listed in the continuation of Box C.  ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 04 October 2019 (04.10.2019) | 15 October 2019 (15.10.2019) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2019/030659

C (Continuation).    DOCUMENTS CONSIDERED TO BE RELEVANT

| Category* | Citation of document, with indication, where appropriate, of the relevant passages | Relevant to claim No. |
|---|---|---|
| X<br>A | JP 2018-108538 A (OSAKA GAS CO., LTD.) 21 July 2018, claims 1-3, 7, paragraph [0069], fig. 1 (Family: none) | 1, 5, 13-15<br>2-4, 6-12 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014512951 W

- JP 2017148734 A